# FASCICULE DE BREVET EUROPEEN

(11) **EP 3 642 052 B1**
(45) Date de publication et mention de la délivrance du brevet: **31.03.2021**
(21) Numéro de dépôt: 18748981.0
(22) Date de dépôt: 21.06.2018
(51) Int. Cl.: B60C 3/02, B60C 5/12, B60C 7/10, B60C 7/12, B60C 7/14, B60C 9/02, B60C 9/04

(54) **DISPOSITIF DE TYPE PNEUMATIQUE POUR VÉHICULE**
REIFENARTIGE VORRICHTUNG FÜR EIN FAHRZEUG
TYRE TYPE DEVICE FOR VEHICLE

(30) Priorité: 23.06.2017 FR 1755740
(43) Date de publication de la demande: 29.04.2020
(73) Titulaire: Compagnie Générale des Etablissements Michelin, 63000 Clermont-Ferrand (FR)
(72) Inventeur: BEAULATON, Daniel, 63040 Clermont-Ferrand Cedex 9 (FR); BONNAMOUR, Matthieu, 63040 Clermont-Ferrand Cedex 9 (FR); VILCOT, Florian, 63040 Clermont-Ferrand Cedex 9 (FR)
(74) Mandataire: Desbordes, Guillaume
(86) Numéro de dépôt international: PCT/FR2018/051502
(87) Numéro de publication internationale: WO 2018/234704

(56) Documents cités:
- WO-A1-2017/005713
- WO-A1-2017/103490
- WO-A1-2017/103491

## Description

La présente invention concerne un dispositif de type pneumatique, destiné à équiper un véhicule. Ce dispositif de type pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO). Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Divers dispositifs de type pneumatique ont été décrits dans le passé. Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante, une pluralité de parois, espacées selon la direction circonférentielle, s'étendant depuis la partie cylindrique radialement intérieure jusqu'à la partie cylindrique radialement extérieure, et assurant le port de la charge. Le document WO 2009087291 décrit une structure pneumatique comprenant deux viroles annulaires respectivement interne, ou radialement intérieure, et externe, ou radialement extérieure, reliées par deux flancs et par une structure porteuse, la structure porteuse étant pressurisée et partageant le volume annulaire du pneumatique en une pluralité de compartiments ou d'alvéoles, et les flancs étant liés ou intégrés à la structure porteuse. Le document WO 2005007422 décrit une roue adaptative comprenant une bande adaptative et une pluralité de rayons s'étendant radialement vers l'intérieur depuis la bande adaptative jusqu'à un moyeu.

Plus récemment, le document WO 2017005713 décrit un dispositif de type pneumatique, destiné à équiper un véhicule, avec une mise à plat améliorée de sa bande de roulement par rapport à un pneumatique classique. Le dispositif de type pneumatique comprend deux structures de révolution respectivement radialement extérieure et radialement intérieure, une structure porteuse constituée par des éléments porteurs identiques, en extension en dehors de l'aire de contact avec le sol et en compression dans l'aire de contact, et deux flancs. Les éléments porteurs sont filaires et sont reliés respectivement à la face radialement intérieure de la structure de révolution radialement extérieure par un tissu radialement extérieur et à la face radialement extérieure de la structure de révolution radialement intérieure par un tissu radialement intérieur. En outre, la densité surfacique moyenne D des éléments porteurs par unité de surface de structure de révolution radialement extérieure, exprimée en 1/m², est au moins égale à (S/S_{E})^{∗}Z/(A^{∗}Fᵣ), où S est la surface, exprimée en m², de la face radialement intérieure de la structure de révolution radialement extérieure, S_{E} est la surface de liaison, exprimée en m², du tissu radialement extérieur avec la face radialement intérieure de la structure de révolution radialement extérieure, Z est la charge radiale nominale, exprimée en N, A est la surface de contact au sol, exprimée en m², et Fᵣ la force à rupture en traction, exprimée en N, de chaque élément porteur. Enfin, le dispositif de type pneumatique comprend deux flancs, reliant deux à deux les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage.

Le principe d'un tel dispositif de type pneumatique est d'avoir une structure porteuse, constituée d'éléments porteurs identiques, deux à deux indépendants dans l'espace annulaire intérieur, et capable de porter la charge appliquée au dispositif de type pneumatique par la mise en tension d'une partie des éléments porteurs positionnés en dehors de l'aire de contact, les éléments porteurs positionnés dans l'aire de contact étant soumis à flambage en compression et ne participant donc pas au port de la charge appliquée.

La structure porteuse est constituée par une pluralité d'éléments porteurs identiques, c'est-à-dire dont les caractéristiques géométriques et les matériaux constitutifs sont identiques.

Les éléments porteurs sont deux à deux indépendants dans l'espace annulaire intérieur, c'est-à-dire non liés mécaniquement entre eux dans l'espace annulaire intérieur, de telle sorte qu'ils ont des comportements mécaniques indépendants. Par exemple, ils ne sont pas liés entre eux de façon à former un réseau ou un treillis.

Chaque élément porteur s'étend continûment à partir de la face radialement intérieure de la structure de révolution radialement extérieure jusqu'à la face radialement extérieure de la structure de révolution radialement intérieure, c'est-à-dire selon une trajectoire comprenant une première extrémité reliée à la face radialement intérieure de la structure de révolution radialement extérieure et une deuxième extrémité reliée à la face radialement extérieure de la structure de révolution radialement intérieure.

Selon une première caractéristique, les éléments porteurs de la structure porteuse sont filaires, c'est-à-dire des éléments unidimensionnels assimilés à des fils.

Selon une deuxième caractéristique, les éléments porteurs de la structure porteuse sont reliés à la face radialement intérieure de la structure de révolution radialement extérieure par un tissu radialement extérieur, recouvrant au moins en partie ladite face radialement intérieure sur une surface de liaison S_{E}, et sont reliés à la face radialement extérieure de la structure de révolution radialement intérieure par un tissu radialement intérieur, recouvrant au moins en partie ladite face radialement extérieure, l'ensemble constitué par la structure porteuse, le tissu radialement extérieur et le tissu radialement intérieur étant une structure sandwich. Ainsi deux tissus respectivement radialement extérieur et radialement intérieur servent d'interfaces entre les éléments porteurs et les structures de révolution respectivement radialement extérieure et radialement intérieure qui ne sont donc pas en contact direct. Par tissu, on entend une structure obtenue par tissage de fils élémentaires pouvant être constitués par divers types de matériaux. Il est à noter que la surface de liaison S_{E} du tissu radialement extérieur avec la face radialement extérieure de la structure de révolution radialement intérieure n'est pas nécessairement identique à la surface S de la face radialement extérieure de la structure de révolution radialement intérieure. En pratique, la surface de liaison S_{E} est au plus égale à la surface S, c'est-à-dire que le tissu radialement extérieur ne recouvre pas nécessairement intégralement la face radialement intérieure de la structure de révolution radialement extérieure.

Cette conception permet avantageusement d'avoir une structure sandwich pouvant être fabriquée de façon indépendante et intégrée d'un seul bloc lors de la fabrication du dispositif de type pneumatique. La structure sandwich ainsi obtenue peut être solidarisée aux structures de révolution respectivement radialement extérieure et radialement intérieure par vulcanisation, collage ou tout autre procédé de liaison des tissus respectivement radialement extérieur et radialement intérieur.

Selon une troisième caractéristique, la densité surfacique moyenne D des éléments porteurs par unité de surface de structure de révolution radialement extérieure, exprimée en 1/m², est au moins égale à (S/S_{E})^{∗}Z/(A^{∗}Fᵣ), où S est la surface, exprimée en m², de la face radialement intérieure de la structure de révolution radialement extérieure, S_{E} est la surface de liaison, exprimée en m², du tissu radialement extérieur avec la face radialement intérieure de la structure de révolution radialement extérieure, Z est la charge radiale nominale, exprimée en N, appliquée au dispositif de type pneumatique, A est la surface de contact au sol, exprimée en m², du dispositif de type pneumatique, et Fᵣ la force à rupture en traction, exprimée en N, de chaque élément porteur.

Cette expression traduit, en particulier, le fait que la densité surfacique moyenne D des éléments porteurs par unité de surface de structure de révolution radialement extérieure est d'autant plus forte que la charge radiale nominale Z élevée et/ou que le rapport de surfaces S_{E}/S, représentant le taux de recouvrement de la face radialement intérieure de la structure de révolution radialement extérieure par le tissu radialement extérieur, est faible. La densité surfacique moyenne D des éléments porteurs est d'autant plus faible que la force à rupture en traction Fᵣ d'un élément porteur est élevée.

Un telle densité surfacique moyenne D des éléments porteurs permet, d'une part, aux éléments porteurs en extension en dehors de l'aire de contact de porter la charge radiale nominale Z, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques classiques et aux autres dispositifs de type pneumatique connus de l'état de la technique.

Généralement, la densité surfacique des éléments porteurs est constante à la fois selon la direction circonférentielle et selon la direction axiale, c'est-à-dire que la répartition des éléments porteurs est uniforme à la fois circonférentiellement et axialement. La densité surfacique moyenne D est donc égale à la densité surfacique constante. L'avantage d'une densité surfacique constante est de contribuer à conférer à la bande de roulement une géométrie quasi cylindrique, avec des ondulations circonférentielles ayant une plus faible amplitude par rapport à d'autres dispositifs de type pneumatique de l'état de la technique.

Toutefois, la densité surfacique des éléments porteurs peut être variable selon la direction circonférentielle et/ou selon la direction axiale, c'est-à-dire que la répartition des éléments porteurs n'est pas nécessairement uniforme circonférentiellement et/ou axialement, d'où l'introduction de la caractéristique de densité surfacique moyenne D.

Enfin, selon une quatrième caractéristique, le dispositif de type pneumatique comprend deux flancs, reliant les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage.

Les flancs, selon leur conception et, en particulier, selon leur rigidité structurelle, peuvent participer plus ou moins au port de la charge appliquée. Les flancs comprennent généralement au moins un matériau élastomérique et peuvent comprendre éventuellement une armature de renforcement. Les flancs peuvent ou non être liés directement à la structure porteuse. Dans le cas où ils ne sont pas liés directement à la structure porteuse, les flancs ont un comportement mécanique autonome, sans incidence sur le fonctionnement mécanique propre de la structure porteuse. En outre, en combinaison avec les deux structures de révolution respectivement radialement extérieure et radialement intérieure, ils ferment l'espace annulaire intérieur qui constitue alors une cavité fermée pouvant être pressurisée ou non par un gaz de gonflage. Dans le cas d'une pressurisation effective par un gaz de gonflage, le dispositif de type pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des structures de révolution respectivement radialement extérieure et radialement intérieure au port de la charge appliquée est faible. En l'absence de pressurisation et dans le cas d'une faible rigidité structurelle des flancs, la structure porteuse et les structures de révolution respectivement radialement extérieure et radialement intérieure assurent la totalité du port de la charge, les flancs ne jouant qu'un rôle de protection vis-à-vis des agressions éventuelles par des éléments extérieurs au dispositif de type pneumatique.

Par rapport à un pneumatique classique de l'état de la technique, un tel dispositif de type pneumatique se caractérise par une mise à plat améliorée de la bande de roulement, en particulier dans un plan méridien, par une augmentation des rayons de courbure méridiens au niveau des extrémités axiales de la bande roulement. Il en résulte, en particulier, une homogénéisation des pressions dans l'aire de contact au sol, ce qui contribue à une amélioration de la durée de vie en usure et de l'adhérence du dispositif de type pneumatique. On constate également une augmentation des fréquences propres de vibrations du dispositif de type pneumatique, ce qui contribue à l'amélioration du confort vibratoire et acoustique du dispositif de type pneumatique. Enfin, la résistance au roulement d'un tel dispositif de type pneumatique est sensiblement diminuée, ce qui est favorable à une baisse de la consommation de carburant du véhicule.

Toutefois, les inventeurs ont souhaité perfectionner le dispositif de type pneumatique, décrit dans le document WO 2017005713, en augmentant sa tenue à la pression et en limitant ses déformations au gonflage, en particulier au niveau des flancs.

D'autres dispositifs de type pneumatique sont également divulgués dans WO2017103490 et WO2017103491.

La présente invention a pour objectif de proposer un dispositif de type pneumatique avec une mise à plat améliorée de sa bande de roulement, lorsqu'il est soumis à une charge.

Ce but a été atteint, selon l'invention, par un dispositif de type pneumatique, destiné à équiper un véhicule, comprenant:
- une structure de révolution radialement extérieure dont l'axe de révolution est l'axe de rotation du dispositif de type pneumatique et destinée à entrer en contact avec un sol par l'intermédiaire d'une bande de roulement comprenant au moins un matériau élastomérique, la structure de révolution radialement extérieure ayant deux extrémités axiales et une face radialement intérieure ayant une surface S, et la structure de révolution radialement extérieure comprenant une armature circonférentielle de renforcement,
- une structure de révolution radialement intérieure, coaxiale à la structure de révolution radialement extérieure et destinée à assurer la liaison du dispositif de type pneumatique avec un moyen de montage sur le véhicule, la structure de révolution radialement intérieure ayant deux extrémités axiales et une face radialement extérieure, et la structure de révolution radialement intérieure comprenant au moins un matériau polymérique,
- un espace annulaire intérieur ayant une hauteur radiale moyenne et radialement délimité par la face radialement intérieure de la structure de révolution radialement extérieure et par la face radialement extérieure de la structure de révolution radialement intérieure,
- une structure porteuse constituée par une pluralité d'éléments porteurs identiques, deux à deux indépendants dans l'espace annulaire intérieur, les éléments porteurs s'étendant continûment à partir de la face radialement intérieure de la structure de révolution radialement extérieure, jusqu'à la face radialement extérieure de la structure de révolution radialement intérieure, de telle sorte que, lorsque le dispositif de type pneumatique est soumis à une charge radiale nominale Z et est en contact avec un sol plan par une surface de contact A, les éléments porteurs, reliés à la portion de la structure de révolution radialement extérieure en contact avec le sol, sont soumis à un flambage en compression et au moins une partie des éléments porteurs, reliés à la portion de la structure de révolution radialement extérieure non en contact avec le sol, sont en tension,
- les éléments porteurs de la structure porteuse étant filaires,
- les éléments porteurs de la structure porteuse étant reliés à la face radialement intérieure de la structure de révolution radialement extérieure par un tissu radialement extérieur, recouvrant au moins en partie ladite face radialement intérieure sur une surface de liaison S_{E}, et étant reliés à la face radialement extérieure de la structure de révolution radialement intérieure par un tissu radialement intérieur, recouvrant au moins en partie ladite face radialement extérieure, l'ensemble constitué par la structure porteuse, le tissu radialement extérieur et le tissu radialement intérieur étant une structure sandwich,
- la densité surfacique moyenne D des éléments porteurs par unité de surface de structure de révolution radialement extérieure, exprimée en 1/m², étant au moins égale à (S/S_{E})^{∗}Z/(A^{∗}Fᵣ), où S est la surface, exprimée en m², de la face radialement intérieure de la structure de révolution radialement extérieure, S_{E} est la surface de liaison, exprimée en m², du tissu radialement extérieur avec la face radialement intérieure de la structure de révolution radialement extérieure, Z est la charge radiale nominale, exprimée en N, appliquée au dispositif de type pneumatique, A est la surface de contact au sol, exprimée en m², du dispositif de type pneumatique, et Fᵣ la force à rupture en traction, exprimée en N, de chaque élément porteur,
- le dispositif de type pneumatique comprenant deux flancs, reliant deux à deux les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage,
- le dispositif de type pneumatique comprenant une armature de carcasse s'étendant radialement dans chaque flanc et axialement au moins en partie dans la structure de révolution radialement extérieure et au moins en partie dans la structure de révolution radialement intérieure.

Le dispositif de type pneumatique précédemment décrit comprend une cavité fermée pouvant être pressurisée par un gaz de gonflage. Dans le cas le plus fréquent où cette cavité fermée est effectivement pressurisée, la pression interne va s'exercer sur toutes les parois de cette cavité, à savoir sur la face radialement intérieure de la structure de révolution radialement extérieure, sur la face radialement extérieure de la structure de révolution radialement intérieure et sur les faces axialement intérieures des flancs.

Du côté de la structure de révolution radialement extérieure, les efforts générés par la pression interne sont repris par l'armature de renforcement de ladite structure de révolution radialement extérieure.

Du côté de la structure de révolution radialement intérieure, les efforts générés par la pression interne sont repris par le moyen de montage sur lequel est destinée à être montée ladite structure de révolution radialement intérieure.

L'invention concerne essentiellement la reprise des efforts générés par la pression interne, au niveau des flancs, par une armature de carcasse positionnée dans chaque flanc. Cette reprise d'efforts au niveau des flancs nécessite en outre un ancrage mécanique de ladite armature de carcasse par rapport aux structures de révolution respectivement radialement extérieure et radialement intérieure : c'est la raison pour laquelle l'armature de carcasse, s'étendant radialement dans chaque flanc, s'étend axialement au moins en partie dans la structure de révolution radialement extérieure et au moins en partie dans la structure de révolution radialement intérieure. En l'absence de cette armature de carcasse renforçant les flancs, la tenue mécanique des flancs à la pression serait faible, et leurs déformations excessives.

Par armature de carcasse, on entend préférentiellement une armature de renforcement comprenant au moins une couche de carcasse constituée par des renforts enrobés dans un mélange élastomérique. Le plus souvent, une telle armature de carcasse comprend une unique couche de carcasse, mais elle peut également être constituée par deux couches de carcasse superposées dont les renforts respectifs sont croisés d'une couche à la suivante.

Préférentiellement, l'armature de carcasse s'étend axialement dans la structure de révolution radialement extérieure, à partir d'un point le plus axialement extérieur de chaque flanc dans lequel s'étend radialement l'armature de carcasse, sur une distance d'ancrage d₁ au moins égale à 25 mm.

Egalement préférentiellement, l'armature de carcasse s'étend axialement dans la structure de révolution radialement intérieure, à partir d'un point le plus axialement extérieur de chaque flanc dans lequel s'étend radialement l'armature de carcasse, sur une distance d'ancrage d₂ au moins égale à 25 mm.

L'armature de carcasse positionnée dans chaque flanc doit être préférentiellement ancrée mécaniquement aux structures de révolution respectivement radialement extérieure et radialement intérieure, sur une distance axiale, appelée distance d'ancrage, suffisante. Les inventeurs ont montré qu'une distance d'ancrage au moins égale à 25 mm était une valeur satisfaisante pour la plupart des armatures de carcasse utilisées. En effet, une armature de carcasse étant constituée par des renforts enrobés dans un mélange élastomérique, la distance d'ancrage est liée, en théorie, à la fois aux épaisseurs de mélange élastomérique autour des renforts, c'est-à-dire au dos des renforts et entre les renforts, ainsi qu'au module d'élasticité dudit mélange élastomérique.

En ce qui concerne la structure de révolution radialement extérieure comprenant une armature circonférentielle de renforcement, la distance d'ancrage de l'armature de carcasse doit également être suffisante pour garantir un recouvrement partiel de l'armature de carcasse et de l'armature circonférentielle de renforcement, sur une distance axiale minimale appelée distance de couplage. Les inventeurs ont montré qu'une distance de couplage au moins égale à 20 mm était une valeur satisfaisante pour la plupart des armatures de carcasse utilisées. Cette distance de couplage garantit un recouvrement minimal, compte tenu des tolérances de fabrication.

Encore préférentiellement, l'armature de carcasse est positionnée, dans la structure de révolution radialement extérieure, radialement à l'intérieur de l'armature circonférentielle de renforcement. Ce positionnement de l'armature de carcasse facilite la fabrication du dispositif de type pneumatique, plus précisément l'empilage des constituants du sommet.

Selon un premier mode de réalisation, l'armature de carcasse est constituée par deux portions d'armature de carcasse s'étendant chacune radialement dans un flanc, à partir d'une première extrémité positionnée dans la structure de révolution radialement extérieure jusqu'à une deuxième extrémité positionnée dans la structure de révolution radialement intérieure. L'armature de carcasse est ainsi constituée par deux portions d'armature de carcasse indépendantes l'une de l'autre.

Selon une première variante du premier mode de réalisation, les premières extrémités respectives et les deuxièmes extrémités respectives des deux portions d'armature de carcasse sont disjointes. En d'autres termes, les deux portions d'armature de carcasse indépendantes sont disjointes au niveau de leurs extrémités radialement extérieures respectives et au niveau de leurs extrémités radialement intérieures respectives. Ce qui permet de limiter l'armature de carcasse aux zones de flancs et aux zones d'ancrage respectifs des portions d'armature de carcasse dans les structures de révolution respectivement radialement extérieure et radialement intérieure, c'est-à-dire au strict nécessaire, d'où une économie de matière.

Selon une deuxième variante du premier mode de réalisation, les premières extrémités respectives et/ou les deuxièmes extrémités respectives des deux portions d'armature de carcasse sont au moins en partie superposées. Dans ce cas, les deux portions d'armature de carcasse indépendantes se recouvrent partiellement au niveau de leurs extrémités radialement extérieures respectives et/ou au niveau leurs extrémités radialement intérieures respectives. Ce qui est intéressant en fabrication car la cavité intérieure du dispositif de type pneumatique est alors étanche au cours de la mise en pression de ladite cavité, lors de l'étape de conformation.

Selon un deuxième mode de réalisation, l'armature de carcasse est constituée par une unique portion d'armature de carcasse s'étendant radialement dans les deux flancs, à partir d'une première extrémité jusqu'à une deuxième extrémité, les première et deuxième extrémités étant positionnées simultanément soit dans la structure de révolution radialement extérieure, soit dans la structure de révolution radialement intérieure. Une telle conception permet de simplifier la fabrication, grâce à la pose d'un seul constituant.

Selon une première variante du deuxième mode de réalisation, la première extrémité et la deuxième extrémité de l'unique portion d'armature de carcasse sont disjointes. La présence d'une discontinuité dans l'armature de carcasse permet une économie de matière vis-à-vis de l'armature de carcasse.

Selon une deuxième variante du deuxième mode de réalisation, la première extrémité et la deuxième extrémité de l'unique portion d'armature de carcasse sont au moins en partie superposées.

Selon une troisième variante du deuxième mode de réalisation, la première extrémité et la deuxième extrémité de l'unique portion d'armature de carcasse sont positionnées bout à bout. Les première et deuxième extrémités, positionnées bout à bout soit dans la structure de révolution radialement extérieure, soit dans la structure de révolution radialement intérieure, constituent une soudure. Outre la simplification de fabrication, grâce à la pose d'un seul constituant, cette variante de conception, assurant une continuité de l'armature de carcasse, permet en outre d'éviter des variations d'épaisseurs au niveau de la face radialement intérieure de la structure de révolution radialement extérieure et au niveau de la face radialement extérieure de la structure de révolution radialement intérieure, et donc de garantir une hauteur radiale moyenne de l'espace annulaire intérieur sensiblement constante, donc une longueur sensiblement identique pour l'ensemble des éléments porteurs de la structure porteuse.

Compte tenu du fait que ce deuxième mode de réalisation se caractérise par la continuité de l'armature de carcasse soit dans la structure de révolution radialement extérieure, soit dans la structure de révolution radialement intérieure, ce deuxième mode de réalisation peut être obtenue, de façon alternative, à l'aide de deux portions d'armature de carcasse ayant leurs premières extrémités respectives ou leurs deuxièmes extrémités respectives positionnées bout à bout garantissant la continuité de l'armature de carcasse.

Dans un autre mode de réalisation d'un pneumatique comprenant toutes les caractéristiques de l'invention, on exclut un pneumatique dans lequel l'armature de carcasse est constituée par une unique portion d'armature de carcasse s'étendant radialement dans les deux flancs, à partir d'une première extrémité jusqu'à une deuxième extrémité, les première et deuxième extrémités étant positionnées bout à bout dans la structure de révolution radialement extérieure.

Avantageusement, l'armature de carcasse comprend au moins une couche de carcasse constituée par des renforts enrobés dans un matériau élastomérique et formant, avec tout plan méridien contenant l'axe de rotation du dispositif de type pneumatique, un angle au plus égal à 45°, de préférence au plus égal à 15°. Dans le cas préférentiel où l'angle est au plus égal à 15°, l'armature de carcasse est dite radiale.

Préférentiellement, l'armature de carcasse comprend au moins une couche de carcasse constituée par des renforts enrobés dans un matériau élastomérique et formant, avec tout plan méridien contenant l'axe de rotation du dispositif de type pneumatique, un angle au plus égal à 5°. Dans ce cas où l'angle est proche de 0°, l'armature de carcasse est dite radiale.

Les renforts de l'armature de carcasse sont le plus souvent des renforts textiles. Les renforts textiles sont constitués de filés de filaments. Les matériaux textiles le plus couramment utilisés sont, par exemple et de façon non exhaustive, le polyéthylène téréphtalate (PET), la rayonne, les polyamides aliphatiques tels que le nylon, les polyamides aromatiques tels que l'aramide ou toute combinaison des précédents matériaux.

En ce qui concerne les flancs, avantageusement les flancs ne sont pas liés directement à la structure porteuse. Ils peuvent ou non participer au port de la charge, selon leur propre rigidité structurelle. Dans le cas où ils participent au port de la charge, ils ont un comportement mécanique indépendant et n'interfèrent pas dans le comportement mécanique de la structure porteuse.

Chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du dispositif de type pneumatique avec une faible courbure.

L'invention a également pour objet un ensemble monté comprenant un dispositif de type pneumatique selon l'un des modes de réalisation précédemment décrits, monté sur un moyen de montage sur le véhicule.

La présente invention sera mieux comprise à l'aide des figures 1 à 5 présentées ci-après:
- Figure 1 : vue en perspective et en coupe partielle d'un dispositif de type pneumatique selon l'invention.
- Figure 2 : vue d'une coupe circonférentielle d'un dispositif de type pneumatique selon l'invention, dans l'état écrasé.
- Figure 3A: vue d'une coupe méridienne d'un dispositif de type pneumatique selon l'invention.
- Figure 3B: vue en perspective d'un élément porteur.
- Figures 4A, 4B, 4C, 4D : section méridienne d'un dispositif de type pneumatique selon une première et une deuxième variantes d'un premier mode de réalisation de l'armature de carcasse.
- Figures 5A, 5B, 5C, 5D et 5E: section méridienne d'un dispositif de type pneumatique selon une première, une deuxième et une troisième variantes d'un deuxième mode de réalisation de l'armature de carcasse.

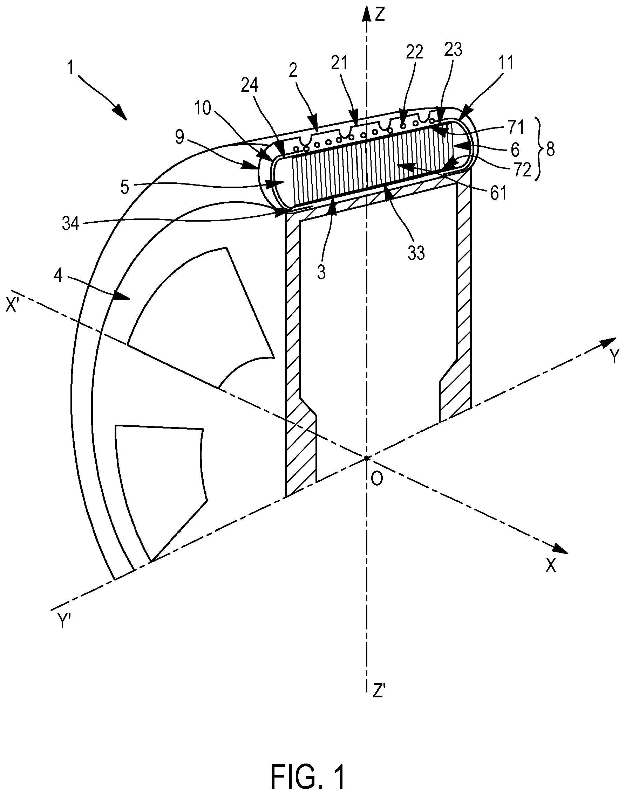

La figure 1 présente une vue en perspective et en coupe partielle d'un dispositif de type pneumatique 1 selon l'invention, monté sur un moyen de montage 4 ou jante, et comprenant une structure de révolution radialement extérieure 2 ayant une face radialement intérieure 23 et deux extrémités axiales 24, une structure de révolution radialement intérieure 3 ayant une face radialement extérieure 33 et deux extrémités axiales 34, un espace annulaire intérieur 5, une structure sandwich 8 comprenant une structure porteuse 6 et deux tissus respectivement radialement extérieur 71 et radialement intérieur 72, et deux flancs 9. La structure de révolution radialement extérieure 2 a un axe de révolution qui est l'axe de rotation YY' du dispositif de type pneumatique et est destinée à entrer en contact avec un sol par l'intermédiaire d'une bande de roulement 21 comprenant au moins un matériau élastomérique. En outre la structure de révolution radialement extérieure 2 comprend une armature circonférentielle de renforcement 22, constituée, dans le cas présent, par une seule couche de renforcement. La structure de révolution radialement intérieure 3, coaxiale à la structure de révolution radialement extérieure 2, est destinée à assurer la liaison du dispositif de type pneumatique 1 avec le moyen de montage 4. La structure de révolution radialement intérieure 3 comprend au moins un matériau polymérique, le plus souvent un mélange élastomérique. L'espace annulaire intérieur 5 est radialement délimité par les structures de révolution respectivement radialement extérieure 2 et radialement intérieure 3. La structure porteuse 6 est constituée par une pluralité d'éléments porteurs 61. s'étendant continûment à partir de la face radialement intérieure 23 de la structure de révolution radialement extérieure 2 jusqu'à la face radialement extérieure 33 de la structure de révolution radialement intérieure 3, deux à deux indépendants dans l'espace annulaire intérieur 5. Les deux tissus radialement extérieur 71 et radialement intérieur 72 de la structure sandwich 8 sont liés, et le plus souvent collés, respectivement à la face radialement intérieure 23 de la structure de révolution radialement extérieure 2 et à la face radialement extérieure 33 de la structure de révolution radialement intérieure 3. En outre, le dispositif de type pneumatique 1 comprend deux flancs 9, reliant les extrémités axiales (24, 34) des structures de révolution respectivement radialement extérieure 2 et radialement intérieure 3 et délimitant axialement l'espace annulaire intérieur 5, de telle sorte que l'espace annulaire intérieur 5 constitue une cavité fermée pouvant être pressurisée par un gaz de gonflage. Enfin, le dispositif de type pneumatique 1 comprend une armature de carcasse (10, 11) s'étendant radialement dans chaque flanc 9 et axialement au moins en partie dans la structure de révolution radialement extérieure 2 et au moins en partie dans la structure de révolution radialement intérieure 3. L'armature de carcasse (10, 11) est constituée par deux portions d'armature de carcasse s'étendant radialement chacune dans un flanc 9, à partir d'une première extrémité positionnée dans la structure de révolution radialement extérieure 2 jusqu'à une deuxième extrémité positionnée dans la structure de révolution radialement intérieure 3. Dans le cas présent, les premières extrémités respectives et les deuxièmes extrémités respectives des deux portions d'armature de carcasse sont disjointes.

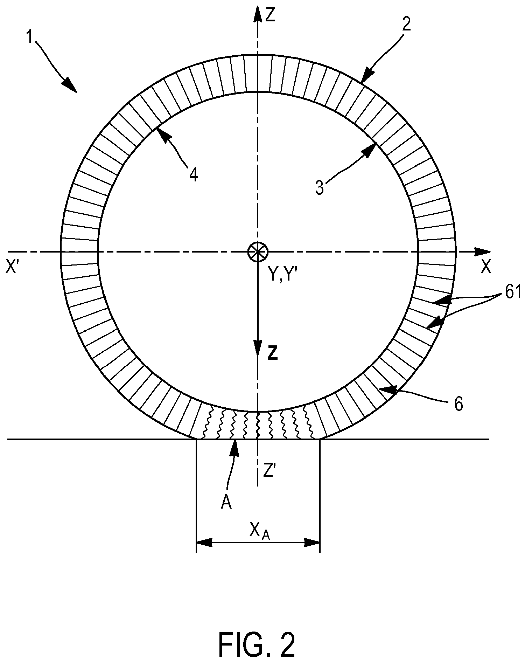

La figure 2 présente une coupe circonférentielle d'un dispositif de type pneumatique 1 selon l'invention, monté sur un moyen de montage 4, dans son état écrasé, c'est-à-dire soumis à une charge radiale nominale Z. La structure porteuse 6 est constituée par une pluralité d'éléments porteurs filaires 61, s'étendant continûment à partir de la structure de révolution radialement extérieure 2 jusqu'à la structure de révolution radialement intérieure 3, deux à deux indépendants dans l'espace annulaire intérieur 5. Le dispositif de type pneumatique 1, soumis à une charge radiale nominale Z, est en contact avec un sol plan par une surface de contact A, ayant une longueur circonférentielle X_{A}. Les éléments porteurs, reliés à la portion de structure de révolution radialement extérieure 2 en contact avec le sol, sont soumis à flambage en compression, alors qu'au moins une partie des éléments porteurs, reliés à la portion de la structure de révolution radialement extérieure 2 non en contact avec le sol, sont en tension.

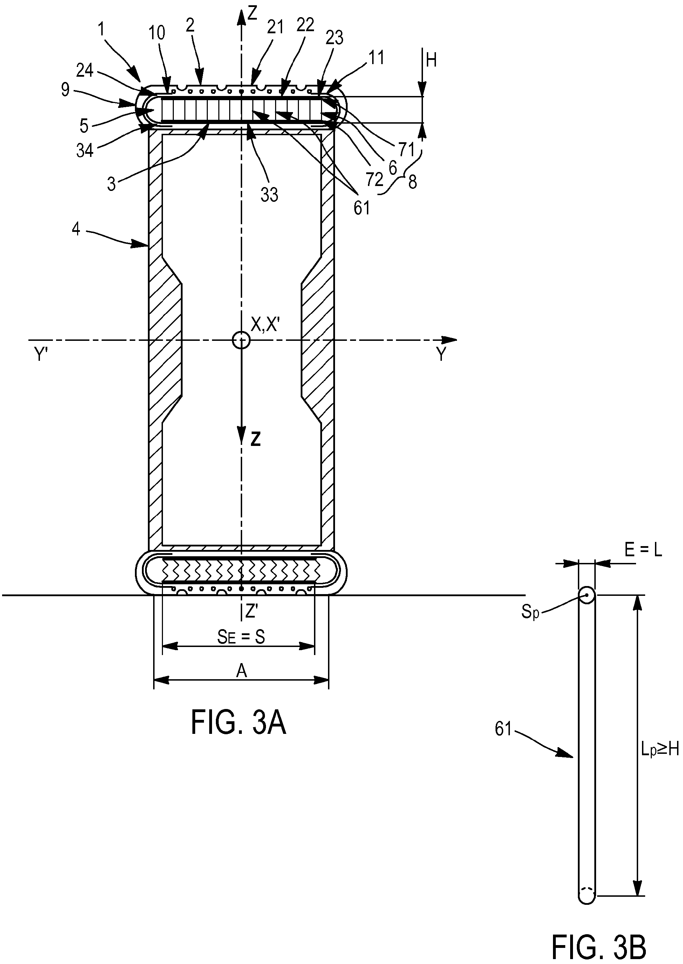

La figure 3A présente une coupe méridienne d'un dispositif de type pneumatique 1 selon l'invention, monté sur un moyen de montage 4. Comme décrit pour la figure 1, le dispositif de type pneumatique 1 comprend une structure de révolution radialement extérieure 2 ayant une face radialement intérieure 23 et deux extrémités axiales 24 et comprenant une bande de roulement 21 et une armature de renforcement 22, une structure de révolution radialement intérieure 3 ayant une face radialement extérieure 33, ayant une surface S, et deux extrémités axiales 34, un espace annulaire intérieur 5 de hauteur H, une structure sandwich 8 comprenant une structure porteuse 6 avec des éléments porteurs filaires 61 et deux tissus respectivement radialement extérieur 71 et radialement intérieur 72, le tissu radialement extérieur 71 ayant une surface de liaison S_{E}, deux flancs 9 et une armature de carcasse (10, 11). Le dispositif de type pneumatique 1, soumis à une charge radiale nominale Z, est en contact avec un sol plan par une surface de contact A. Comme vu précédemment, les éléments porteurs 61, positionnés à l'opposé de l'aire de contact sont en tension, alors que les éléments porteurs 61, reliés à la portion de structure de révolution radialement extérieure 2 en contact avec le sol, sont soumis à flambage en compression.

La figure 3B présente un élément porteur filaire ou unidimensionnel 61 ayant une section moyenne S_{P} circulaire, définie par une plus petite dimension caractéristique E et une plus grande dimension caractéristique L toutes deux égales, dans l'exemple présenté, au diamètre du cercle, et caractérisée par son rapport de forme K égal à L/E, donc égal à 1 dans le cas présent. En outre la plus petite dimension caractéristique E de la section moyenne S_{P} de l'élément porteur 61, c'est-à-dire, dans le cas présent, son diamètre, est au plus égale à 0.02 fois la hauteur radiale moyenne H de l'espace annulaire intérieur 5. L'élément porteur 61 a une longueur Lp au moins égale à la hauteur moyenne H de l'espace annulaire intérieur 5.

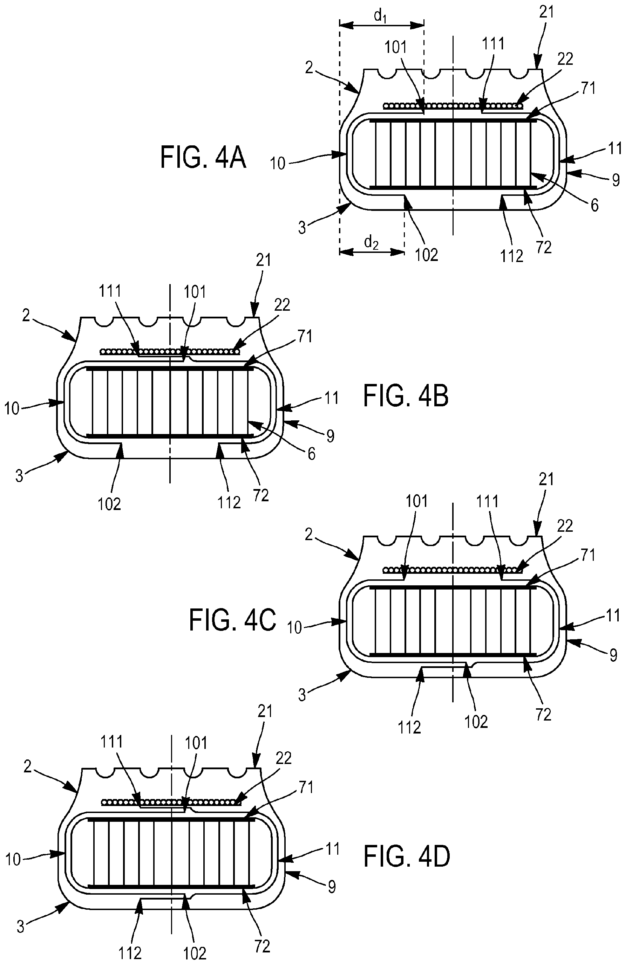

Les figures 4A à 4D présentent une section méridienne d'un dispositif de type pneumatique selon l'invention, comprenant une structure de révolution radialement extérieure 2, ayant une bande de roulement 21 et une armature de renforcement 22, une structure de révolution radialement intérieure 3 et une structure porteuse 6 reliée respectivement à un tissu radialement extérieur 71 et un tissu radialement intérieur 72. Les figures 4A à 4D présentent plus particulièrement diverses variantes d'un premier mode de réalisation dans lequel l'armature de carcasse (10, 11) est constituée par deux portions d'armature de carcasse (10, 11) s'étendant chacune radialement dans un flanc 9, à partir d'une première extrémité (101, 111) positionnée dans la structure de révolution radialement extérieure 2 jusqu'à une deuxième extrémité (102, 112) positionnée dans la structure de révolution radialement intérieure 3.

Sur la figure 4A, selon une première variante du premier mode de réalisation, les premières extrémités respectives (101, 111) et les deuxièmes extrémités respectives (101, 111) des deux portions d'armature de carcasse (10, 11) sont disjointes. Chaque première extrémité (101, 111), positionnée dans la structure de révolution radialement extérieure 2, est positionnée à une distance d'ancrage d₁ au moins égale à 25 mm du point axialement le plus extérieur du flanc 9 dans lequel s'étend radialement la portion d'armature de carcasse (10, 11). Chaque deuxième extrémité (102, 112), positionnée dans la structure de révolution radialement intérieure 3, est positionnée à une distance d'ancrage d₂ au moins égale à 25 mm du point le plus extérieur du flanc 9 dans lequel s'étend radialement la portion d'armature de carcasse (10, 11). L'armature de carcasse (10, 11) est positionnée, dans la structure de révolution radialement extérieure 2, radialement à l'intérieur de l'armature circonférentielle de renforcement 22, elle-même radialement intérieure à la bande de roulement 21.

Les figures 4B, 4C et 4D présentent trois exemples d'une deuxième variante du premier mode de réalisation. Sur la figure 4B, les premières extrémités (101, 111), positionnées dans la structure de révolution radialement extérieure 2, sont superposées alors que les deuxièmes extrémités (102, 112), positionnées dans la structure de révolution radialement intérieure 3, sont disjointes. Inversement, sur la figure 4C, les premières extrémités (101, 102), positionnées dans la structure de révolution radialement extérieure 2, sont disjointes alors que les deuxièmes extrémités (102, 112), positionnées dans la structure de révolution radialement intérieure 3, sont superposées. Enfin, sur la figure 4D, les premières extrémités (101, 111), positionnées dans la structure de révolution radialement extérieure 2, sont superposées et les deuxièmes extrémités (102, 112), positionnées dans la structure de révolution radialement intérieure 3, sont également superposées.

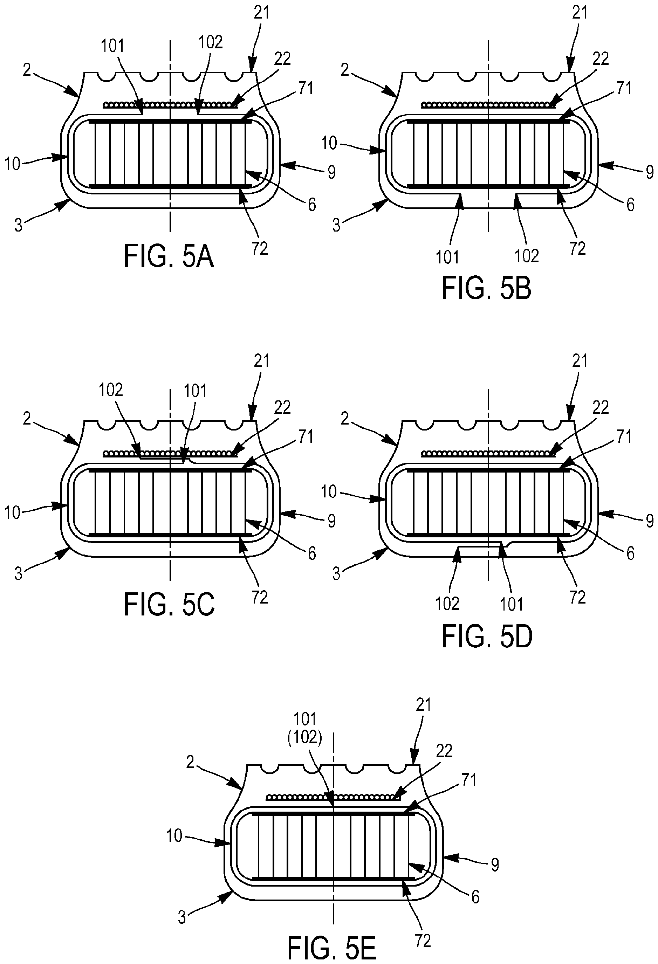

Les figures 5A à 5E présentent une section méridienne d'un dispositif de type pneumatique selon l'invention, comprenant une structure de révolution radialement extérieure 2, ayant une bande de roulement 21 et une armature de renforcement 22, une structure de révolution radialement intérieure 3 et une structure porteuse 6 reliée respectivement à un tissu radialement extérieur 71 et un tissu radialement intérieur 72. Les figures 5A à 5E présentent plus particulièrement diverses variantes d'un deuxième mode de réalisation dans lequel l'armature de carcasse 10 est constituée par une unique portion d'armature de carcasse 10 s'étendant radialement dans les deux flancs 9, à partir d'une première extrémité 101 jusqu'à une deuxième extrémité 102

Sur les figures 5A et 5B, selon une première variante du deuxième mode de réalisation, les première et deuxième extrémités (101, 102) sont positionnées simultanément et disjointes soit dans la structure de révolution radialement extérieure 2 (figure 5A), soit dans la structure de révolution radialement intérieure 3 (figure 5B).

Les figures 5C et 5D présentent une deuxième variante du deuxième mode de réalisation, dans laquelle les première et deuxième extrémités (101, 102) sont positionnées simultanément et superposées soit dans la structure de révolution radialement extérieure 2 (figure 5C), soit dans la structure de révolution radialement intérieure 3 (figure 5D).

Enfin la figure 5E présente une troisième variante du deuxième mode de réalisation, dans laquelle les première et deuxième extrémités (101, 102) sont positionnées bout à bout dans la structure de révolution radialement extérieure 2, de façon à former une soudure. Ce positionnement bout à bout peut également être réalisé dans la structure de révolution radialement intérieure 3 (cas non représenté). Dans le cas présenté sur la figure 5E, l'armature de carcasse 10 constitue une surface fermée sans superposition, donc d'épaisseur constante.

L'invention a été plus particulièrement étudiée en tant que solution alternative à un pneumatique classique pour véhicule de tourisme.

## Revendications

1. Dispositif de type pneumatique (1), destiné à équiper un véhicule, comprenant:
- une structure de révolution radialement extérieure (2) dont l'axe de révolution est l'axe de rotation (YY') du dispositif de type pneumatique (1) et destinée à entrer en contact avec un sol par l'intermédiaire d'une bande de roulement (21) comprenant au moins un matériau élastomérique, la structure de révolution radialement extérieure (2) ayant deux extrémités axiales (24) et une face radialement intérieure (23) ayant une surface S, et la structure de révolution radialement extérieure (2) comprenant une armature circonférentielle de renforcement (22),
- une structure de révolution radialement intérieure (3), coaxiale à la structure de révolution radialement extérieure (2) et destinée à assurer la liaison du dispositif de type pneumatique (1) avec un moyen de montage (4) sur le véhicule, la structure de révolution radialement intérieure (3) ayant deux extrémités axiales (34) et une face radialement extérieure (33), et la structure de révolution radialement intérieure (3) comprenant au moins un matériau polymérique,
- un espace annulaire intérieur (5) ayant une hauteur radiale moyenne (H) et radialement délimité par la face radialement intérieure (23) de la structure de révolution radialement extérieure (2) et par la face radialement extérieure (33) de la structure de révolution radialement intérieure (3),
- une structure porteuse (6) constituée par une pluralité d'éléments porteurs identiques (61), deux à deux indépendants dans l'espace annulaire intérieur (5), les éléments porteurs (61) s'étendant continûment à partir de la face radialement intérieure (23) de la structure de révolution radialement extérieure (2), jusqu'à la face radialement extérieure (33) de la structure de révolution radialement intérieure (3), de telle sorte que, lorsque le dispositif de type pneumatique (1) est soumis à une charge radiale nominale Z et est en contact avec un sol plan par une surface de contact A, les éléments porteurs (61), reliés à la portion de la structure de révolution radialement extérieure (2) en contact avec le sol, sont soumis à un flambage en compression et au moins une partie des éléments porteurs (61), reliés à la portion de la structure de révolution radialement extérieure (2) non en contact avec le sol, sont en tension,
- les éléments porteurs (61) de la structure porteuse (6) étant filaires,
- les éléments porteurs (61) de la structure porteuse (6) étant reliés à la face radialement intérieure (23) de la structure de révolution radialement extérieure (2) par un tissu radialement extérieur (71), recouvrant au moins en partie ladite face radialement intérieure (23) sur une surface de liaison S_{E}, et sont reliés à la face radialement extérieure (33) de la structure de révolution radialement intérieure (3) par un tissu radialement intérieur (72), recouvrant au moins en partie ladite face radialement extérieure (33), l'ensemble constitué par la structure porteuse (6), le tissu radialement extérieur (71) et le tissu radialement intérieur (72) étant une structure sandwich (8),
- la densité surfacique moyenne D des éléments porteurs (61) par unité de surface de structure de révolution radialement extérieure (2), exprimée en 1/m², étant au moins égale à (S/S_{E})^{∗}Z/(A^{∗}Fᵣ), où S est la surface, exprimée en m², de la face radialement intérieure (23) de la structure de révolution radialement extérieure (2), S_{E} est la surface de liaison, exprimée en m², du tissu radialement extérieur (71) avec la face radialement intérieure (23) de la structure de révolution radialement extérieure (2), Z est la charge radiale nominale, exprimée en N, appliquée au dispositif de type pneumatique (1), A est la surface de contact au sol, exprimée en m², du dispositif de type pneumatique (1), et Fᵣ la force à rupture en traction, exprimée en N, de chaque élément porteur (61),
- le dispositif de type pneumatique (1) comprenant deux flancs (9), reliant deux à deux les extrémités axiales (24, 34) des structures de révolution respectivement radialement extérieure (2) et radialement intérieure (3) et délimitant axialement l'espace annulaire intérieur (5), de telle sorte que l'espace annulaire intérieur (5) constitue une cavité fermée pouvant être pressurisée par un gaz de gonflage,
**caractérisé en ce que** le dispositif de type pneumatique (1) comprend une armature de carcasse (10, 11) s'étendant radialement dans chaque flanc (9) et axialement au moins en partie dans la structure de révolution radialement extérieure (2) et au moins en partie dans la structure de révolution radialement intérieure (3).

2. Dispositif de type pneumatique (1) selon la revendication 1, **dans lequel** l'armature de carcasse (10, 11) s'étend axialement dans la structure de révolution radialement extérieure (2), à partir d'un point le plus axialement extérieur de chaque flanc (9) dans lequel s'étend radialement l'armature de carcasse (10, 11), sur une distance d'ancrage d₁ au moins égale à 25 mm.

3. Dispositif de type pneumatique (1) selon l'une des revendications 1 ou 2, dans lequel l'armature de carcasse (10, 11) s'étend axialement dans la structure de révolution radialement intérieure (3), à partir d'un point le plus axialement extérieur de chaque flanc (9) dans lequel s'étend radialement l'armature de carcasse (10, 11), sur une distance d'ancrage d₂ au moins égale à 25 mm.

4. Dispositif de type pneumatique (1) selon l'une quelconque des revendications 1 à 3, **dans lequel** l'armature de carcasse (10, 11) est positionnée, dans la structure de révolution radialement extérieure (2), radialement à l'intérieur de l'armature circonférentielle de renforcement (22).

5. Dispositif de type pneumatique (1) selon l'une quelconque des revendications 1 à 4, **dans lequel** l'armature de carcasse (10, 11) est constituée par deux portions d'armature de carcasse (10, 11) s'étendant chacune radialement dans un flanc (9), à partir d'une première extrémité (101, 111) positionnée dans la structure de révolution radialement extérieure (2) jusqu'à une deuxième extrémité (102, 112) positionnée dans la structure de révolution radialement intérieure (3).

6. Dispositif de type pneumatique (1) selon la revendication 5, **dans lequel** les premières extrémités respectives (101, 111) et les deuxièmes extrémités respectives (102, 112) des deux portions d'armature de carcasse (10, 11) sont disjointes.

7. Dispositif de type pneumatique (1) selon la revendication 5, **dans lequel** les premières extrémités respectives (101, 111) et/ou les deuxièmes extrémités respectives (102, 112) des deux portions d'armature de carcasse (10, 11) sont au moins en partie superposées.

8. Dispositif de type pneumatique (1) selon l'une quelconque des revendications 1 à 4, **dans lequel** l'armature de carcasse (10) est constituée par une unique portion d'armature de carcasse (10) s'étendant radialement dans les deux flancs (9), à partir d'une première extrémité (101) jusqu'à une deuxième extrémité (102), les première et deuxième extrémités (101, 102) étant positionnées simultanément soit dans la structure de révolution radialement extérieure (2), soit dans la structure de révolution radialement intérieure (3).

9. Dispositif de type pneumatique (1) selon la revendication 8, **dans lequel** la première extrémité (101) et la deuxième extrémité (102) de l'unique portion d'armature de carcasse (10) sont disjointes.

10. Dispositif de type pneumatique (1) selon la revendication 8, **dans lequel** la première extrémité (101) et la deuxième extrémité (102) de l'unique portion d'armature de carcasse (10) sont au moins en partie superposées.

11. Dispositif de type pneumatique (1) selon la revendication 8, **dans lequel** la première extrémité (101) et la deuxième extrémité (102) de l'unique portion d'armature de carcasse (10) sont positionnées bout à bout.

12. Dispositif de type pneumatique (1) selon l'une quelconque des revendications 1 à 11, **dans lequel** l'armature de carcasse (10, 11) comprend au moins une couche de carcasse constituée par des renforts enrobés dans un matériau élastomérique et formant, avec tout plan méridien contenant l'axe de rotation (YY') du dispositif de type pneumatique (1), un angle au plus égal à 45°, de préférence au plus égal à 15°.

13. Dispositif de type pneumatique (1) selon l'une quelconque des revendications 1 à 12, **dans lequel** l'armature de carcasse (10, 11) comprend au moins une couche de carcasse constituée par des renforts enrobés dans un matériau élastomérique et formant, avec tout plan méridien contenant l'axe de rotation (YY') du dispositif de type pneumatique (1), un angle au plus égal à 5°

14. Dispositif de type pneumatique (1) selon l'une des revendications 12 ou 13, **dans lequel** les renforts de l'armature de carcasse (10, 11) sont des renforts textiles.

15. Ensemble monté (1, 4) comprenant un dispositif de type pneumatique (1) selon l'une quelconque des revendications 1 à 14 monté sur un moyen de montage (4) sur le véhicule.

## Patentansprüche

1. Reifenartige Vorrichtung (1), welche zur Ausrüstung eines Fahrzeugs bestimmt ist, umfassend:
- eine radial äußere Rotationsstruktur (2), deren Umdrehungsachse die Drehachse (YY') der reifenartigen Vorrichtung (1) ist und die dazu bestimmt ist, über einen Laufstreifen (21), der wenigstens ein elastomeres Material umfasst, mit einem Boden in Kontakt zu kommen, wobei die radial äußere Rotationsstruktur (2) zwei axiale Enden (24) und eine radial innere Seite (23) mit einer Fläche S aufweist und die radial äußere Rotationsstruktur (2) und eine Umfangsverstärkungsbewehrung (22) umfasst,
- eine radial innere Rotationsstruktur (3), die mit der radial äußeren Rotationsstruktur (2) koaxial ist und dazu bestimmt ist, die Verbindung der reifenartigen Vorrichtung (1) mit einem Mittel zur Montage (4) am Fahrzeug sicherzustellen, wobei die radial innere Rotationsstruktur (3) zwei axiale Enden (34) und eine radial äußere Seite (33) aufweist und die radial innere Rotationsstruktur (3) wenigstens ein Polymermaterial umfasst,
- einen ringförmigen Innenraum (5) mit einer mittleren radialen Höhe (H), der radial von der radial inneren Seite (23) der radial äußeren Rotationsstruktur (2) und von der radial äußeren Seite (33) der radial inneren Rotationsstruktur (3) begrenzt wird,
- eine Tragstruktur (6), die aus einer Vielzahl von paarweise unabhängigen identischen Tragelementen (61) in dem ringförmigen Innenraum (5) besteht, wobei sich die Tragelemente (61) von der radial inneren Seite (23) der radial äußeren Rotationsstruktur (2) durchgehend bis zu der radial äußeren Seite (33) der radial inneren Rotationsstruktur (3) erstrecken, derart, dass, wenn auf die reifenartige Vorrichtung (1) eine radiale Nennlast Z einwirkt und sie über eine Kontaktfläche A mit einem ebenen Boden in Kontakt steht, die Tragelemente (61), die mit dem Abschnitt der radial äußeren Rotationsstruktur (2), der mit dem Boden in Kontakt steht, verbunden sind, eine Knickung unter Druck erfahren und wenigstens ein Teil der Tragelemente (61), die mit dem Abschnitt der radial äußeren Rotationsstruktur (2), der nicht mit dem Boden in Kontakt steht, verbunden sind, einer Zugspannung ausgesetzt ist,
- wobei die Tragelemente (61) der Tragstruktur (6) fadenartig sind,
- wobei die Tragelemente (61) der Tragstruktur (6) mit der radial inneren Seite (23) der radial äußeren Rotationsstruktur (2) durch ein radial äußeres Gewebe (71) verbunden sind, das die radial innere Seite (23) wenigstens teilweise auf einer Verbindungsfläche S_{E} bedeckt, und mit der radial äußeren Seite (33) der radial inneren Rotationsstruktur (3) durch ein radial inneres Gewebe (72) verbunden sind, das die radial äußere Seite (33) wenigstens teilweise bedeckt, wobei die Anordnung, die von der Tragstruktur (6), dem radial äußeren Gewebe (71) und dem radial inneren Gewebe (72) gebildet wird, eine Sandwichstruktur (8) ist,
- wobei die mittlere Flächendichte D der Tragelemente (61) pro Flächeneinheit der radial äußeren Rotationsstruktur (2), ausgedrückt in 1/m², mindestens gleich (S/S_{E})^{∗}Z/(A^{∗}Fᵣ) ist, wobei S die Fläche der radial inneren Seite (23) der radial äußeren Rotationsstruktur (2) ist, ausgedrückt in m², S_{E} die Verbindungsfläche des radial äußeren Gewebes (71) mit der radial inneren Seite (23) der radial äußeren Rotationsstruktur (2) ist, ausgedrückt in m², Z die radiale Nennlast ist, die auf die reifenartige Vorrichtung (1) einwirkt, ausgedrückt in N, A die Kontaktfläche der reifenartigen Vorrichtung (1) mit dem Boden ist, ausgedrückt in m², und Fᵣ die Zugreißfestigkeit jedes Tragelements (61) ist, ausgedrückt in N,
- wobei die reifenartige Vorrichtung (1) zwei Seitenwände (9) umfasst, welche die axialen Enden (24, 34) der radial äußeren (2) bzw. radial inneren (3) Rotationsstruktur paarweise verbinden und den ringförmigen Innenraum (5) axial begrenzen, derart, dass der ringförmige Innenraum (5) einen geschlossenen Hohlraum bildet, der von einem Aufblasgas mit Druck beaufschlagt werden kann,
**dadurch gekennzeichnet, dass** die reifenartige Vorrichtung (1) eine Karkassenbewehrung (10, 11) umfasst, die sich radial in jeder Seitenwand (9) und axial wenigstens teilweise in der radial äußeren Rotationsstruktur (2) und wenigstens teilweise in der radial inneren Rotationsstruktur (3) erstreckt.

2. Reifenartige Vorrichtung (1) nach Anspruch 1, wobei sich die Karkassenbewehrung (10, 11) in der radial äußeren Rotationsstruktur (2) axial von einem axial äußersten Punkt jeder Seitenwand (9) aus, in welcher sich die Karkassenbewehrung (10, 11) radial erstreckt, über eine Verankerungslänge d₁ erstreckt, die mindestens 25 mm beträgt.

3. Reifenartige Vorrichtung (1) nach einem der Ansprüche 1 oder 2, wobei sich die Karkassenbewehrung (10, 11) in der radial inneren Rotationsstruktur (3) axial von einem axial äußersten Punkt jeder Seitenwand (9) aus, in welcher sich die Karkassenbewehrung (10, 11) radial erstreckt, über eine Verankerungslänge d₂ erstreckt, die mindestens 25 mm beträgt.

4. Reifenartige Vorrichtung (1) nach einem der Ansprüche 1 bis 3, wobei die Karkassenbewehrung (10, 11) in der radial äußeren Rotationsstruktur (2) radial innerhalb der Umfangsverstärkungsbewehrung (22) positioniert ist.

5. Reifenartige Vorrichtung (1) nach einem der Ansprüche 1 bis 4, wobei die Karkassenbewehrung (10, 11) aus zwei Karkassenbewehrungs-Abschnitten (10, 11) besteht, die sich jeweils radial in einer Seitenwand (9) von einem ersten Ende (101, 111), das in der radial äußeren Rotationsstruktur (2) positioniert ist, bis zu einem zweiten Ende (102, 112), das in der radial inneren Rotationsstruktur (3) positioniert ist, erstrecken.

6. Reifenartige Vorrichtung (1) nach Anspruch 5, wobei die jeweiligen ersten Enden (101, 111) und die jeweiligen zweiten Enden (102, 112) der zwei Karkassenbewehrungs-Abschnitte (10, 11) getrennt sind.

7. Reifenartige Vorrichtung (1) nach Anspruch 5, wobei die jeweiligen ersten Enden (101, 111) und/oder die jeweiligen zweiten Enden (102, 112) der zwei Karkassenbewehrungs-Abschnitte (10, 11) einander wenigstens teilweise überlagern.

8. Reifenartige Vorrichtung (1) nach einem der Ansprüche 1 bis 4, wobei die Karkassenbewehrung (10) aus einem einzigen Karkassenbewehrungs-Abschnitt (10) besteht, der sich radial in den zwei Seitenwänden (9) von einem ersten Ende (101) bis zu einem zweiten Ende (102) erstreckt, wobei das erste und das zweite Ende (101, 102) gleichzeitig entweder in der radial äußeren Rotationsstruktur (2) oder in der radial inneren Rotationsstruktur (3) positioniert sind.

9. Reifenartige Vorrichtung (1) nach Anspruch 8, wobei das erste Ende (101) und das zweite Ende (102) des einzigen Karkassenbewehrungs-Abschnitts (10) getrennt sind.

10. Reifenartige Vorrichtung (1) nach Anspruch 8, wobei das erste Ende (101) und das zweite Ende (102) des einzigen Karkassenbewehrungs-Abschnitts (10) einander wenigstens teilweise überlagern.

11. Reifenartige Vorrichtung (1) nach Anspruch 8, wobei das erste Ende (101) und das zweite Ende (102) des einzigen Karkassenbewehrungs-Abschnitts (10) aneinanderstoßend positioniert sind.

12. Reifenartige Vorrichtung (1) nach einem der Ansprüche 1 bis 11, wobei die Karkassenbewehrung (10, 11) wenigstens eine Karkassenschicht umfasst, die aus Festigkeitsträgern besteht, die in ein elastomeres Material eingebettet sind und mit jeder Meridianebene, welche die Drehachse (YY') der reifenartigen Vorrichtung (1) enthält, einen Winkel bilden, der höchstens 45°, vorzugsweise höchstens 15° beträgt.

13. Reifenartige Vorrichtung (1) nach einem der Ansprüche 1 bis 12, wobei die Karkassenbewehrung (10, 11) wenigstens eine Karkassenschicht umfasst, die aus Festigkeitsträgern besteht, die in ein elastomeres Material eingebettet sind und mit jeder Meridianebene, welche die Drehachse (YY') der reifenartigen Vorrichtung (1) enthält, einen Winkel bilden, der höchstens 5° beträgt.

14. Reifenartige Vorrichtung (1) nach einem der Ansprüche 12 oder 13, wobei die Festigkeitsträger der Karkassenbewehrung (10, 11) textile Festigkeitsträger sind.

15. Montierte Einheit (1, 4), welche eine reifenartige Vorrichtung (1) nach einem der Ansprüche 1 bis 14 umfasst, die auf einem Mittel zur Montage (4) am Fahrzeug angebracht ist.

## Claims

1. Tyre-type device (1) intended to equip a vehicle, comprising:
- a radially outer structure of revolution (2), the axis of revolution of which is the axis of rotation (YY') of the tyre-type device (1) and which is intended to come into contact with the ground via a tread (21) comprising at least one elastomeric material, the radially outer structure of revolution (2) having two axial ends (24) and a radially inner face (23) having an area S, and the radially outer structure of revolution (2) comprising a circumferential reinforcement (22),
- a radially inner structure of revolution (3) that is coaxial with the radially outer structure of revolution (2) and is intended to provide the connection of the tyre-type device (1) to a means (4) for mounting on the vehicle, the radially inner structure of revolution (3) having two axial ends (34) and a radially outer face (33), and the radially inner structure of revolution (3) comprising at least one polymeric material,
- an inner annular space (5) that has a mean radial height (H) and is radially delimited by the radially inner face (23) of the radially outer structure of revolution (2) and by the radially outer face (33) of the radially inner structure of revolution (3),
- a bearing structure (6) made up of a plurality of identical bearing elements (61) that are independent in pairs in the inner annular space (5), the bearing elements (61) extending continuously from the radially inner face (23) of the radially outer structure of revolution (2) to the radially outer face (33) of the radially inner structure of revolution (3), such that, when the tyre-type device (1) is subjected to a nominal radial load Z and is in contact with flat ground via an area of contact A, the bearing elements (61) that are connected to that portion of the radially outer structure of revolution (2) that is in contact with the ground are made to buckle under compression and at least some of the bearing elements (61) that are connected to that portion of the radially outer structure of revolution (2) that is not in contact with the ground are under tension,
- the bearing elements (61) of the bearing structure (6) being filamentary,
- the bearing elements (61) of the bearing structure (6) being connected to the radially inner face (23) of the radially outer structure of revolution (2) by a radially outer fabric (71), at least partially covering said radially inner face (23) over a connecting area S_{E}, and being connected to the radially outer face (33) of the radially inner structure of revolution (3) by a radially inner fabric (72), at least partially covering said radially outer face (33), the assembly made up of the bearing structure (6), the radially outer fabric (71) and the radially inner fabric (72) being a sandwich structure (8),
- the mean surface density D of the bearing elements (61) per unit area of radially outer structure of revolution (2), expressed in 1/m², being at least equal to (S/S_{E})^{∗}Z/(A^{∗}Fᵣ), where S is the area, expressed in m², of the radially inner face (23) of the radially outer structure of revolution (2), S_{E} is the connecting area, expressed in m², of the radially outer fabric (71) with the radially inner face (23) of the radially outer structure of revolution (2), Z is the nominal radial load, expressed in N, applied to the tyre-type device (1), A is the area of contact with the ground, expressed in m², of the tyre-type device (1), and Fᵣ is the force at break under tension, expressed in N, of each bearing element (61),
- the tyre-type device (1) comprising two sidewalls (9) that connect, in pairs, the axial ends (24, 34) of the radially outer (2) and radially inner (3) structures of revolution, respectively, and axially delimit the inner annular space (5), such that the inner annular space (5) forms a closed cavity that can be pressurized by an inflation gas,
**characterized in that** the tyre-type device (1) comprises a carcass reinforcement (10, 11) extending radially in each sidewall (9) and axially at least partially in the radially outer structure of revolution (2) and at least partially in the radially inner structure of revolution (3).

2. Tyre-type device (1) according to Claim 1, **wherein** the carcass reinforcement (10, 11) extends axially in the radially outer structure of revolution (2), from an axially outermost point of each sidewall (9) in which the carcass reinforcement (10, 11) extends radially, over an anchoring distance d₁ at least equal to 25 mm.

3. Tyre-type device (1) according to either of Claims 1 and 2, **wherein** the carcass reinforcement (10, 11) extends axially in the radially inner structure of revolution (3), from an axially outermost point of each sidewall (9) in which the carcass reinforcement (10, 11) extends radially, over an anchoring distance d₂ at least equal to 25 mm.

4. Tyre-type device (1) according to any one of Claims 1 to 3, **wherein** the carcass reinforcement (10, 11) is positioned, in the radially outer structure of revolution (2), radially on the inside of the circumferential reinforcement (22).

5. Tyre-type device (1) according to any one of Claims 1 to 4, **wherein** the carcass reinforcement (10, 11) is made up of two portions of carcass reinforcement (10, 11) each extending radially in a sidewall (9), from a first end (101, 111) positioned in the radially outer structure of revolution (2) to a second end (102, 112) positioned in the radially inner structure of revolution (3).

6. Tyre-type device (1) according to Claim 5, **wherein** the respective first ends (101, 111) and the respective second ends (102, 112) of the two portions of carcass reinforcement (10, 11) are separate.

7. Tyre-type device (1) according to Claim 5, **wherein** the respective first ends (101, 111) and/or the respective second ends (102, 112) of the two portions of carcass reinforcement (10, 11) are at least partially superposed.

8. Tyre-type device (1) according to any one of Claims 1 to 4, **wherein** the carcass reinforcement (10) is made up of a single portion of carcass reinforcement (10) extending radially in the two sidewalls (9), from a first end (101) to a second end (102), the first and second ends (101, 102) being positioned simultaneously either in the radially outer structure of revolution (2) or in the radially inner structure of revolution (3).

9. Tyre-type device (1) according to Claim 8, **wherein** the first end (101) and the second end (102) of the single portion of carcass reinforcement (10) are separate.

10. Tyre-type device (1) according to Claim 8, **wherein** the first end (101) and the second end (102) of the single portion of carcass reinforcement (10) are at least partially superposed.

11. Tyre-type device (1) according to Claim 8, **wherein** the first end (101) and the second end (102) of the single portion of carcass reinforcement (10) are positioned end-to-end.

12. Tyre-type device (1) according to any one of Claims 1 to 11, **wherein** the carcass reinforcement (10, 11) comprises at least one carcass layer made up of reinforcers that are coated with an elastomeric material and form, with any meridian plane containing the axis of rotation (YY') of the tyre-type device (1), an angle at most equal to 45°, preferably at most equal to 15°.

13. Tyre-type device (1) according to any one of Claims 1 to 12, **wherein** the carcass reinforcement (10, 11) comprises at least one carcass layer made up of reinforcers that are coated with an elastomeric material and form, with any meridian plane containing the axis of rotation (YY') of the tyre-type device (1), an angle at most equal to 5°.

14. Tyre-type device (1) according to either of Claims 12 and 13, **wherein** the reinforcers of the carcass reinforcement (10, 11) are textile reinforcers.

15. Mounted assembly (1, 4) comprising a tyre-type device (1) according to any one of Claims 1 to 14 mounted on a means (4) for mounting on the vehicle.
